# EUROPÄISCHE PATENTSCHRIFT

(11) **EP 1 669 363 B1**
(45) Veröffentlichungstag und Bekanntmachung des Hinweises auf die Patenterteilung: **20.09.2006**
(21) Anmeldenummer: 05023987.0
(22) Anmeldetag: 03.11.2005
(51) Int. Cl.: C07F 7/14, C07F 7/08

(54) **Verfahren zur kontinuierlichen Hydrosilylierung**
Process for continuous hydrosilylation
Méthode d' hydrosilylation en continu

(30) Priorität: 01.12.2004 DE 102004058000
(43) Veröffentlichungstag der Anmeldung: 14.06.2006
(73) Patentinhaber: Wacker Chemie AG, 81737 München (DE)
(72) Erfinder: Geisberger, Gilbert, Dr., 84503 Altötting (DE); Baumann, Frank, Dr., 84529 Tittmoning (DE); Daniels, Andreas, 84547 Emmerting (DE)
(74) Vertreter: Fritz, Helmut

(56) Entgegenhaltungen:
- EP-A- 0 934 947
- US-B1- 6 291 622

## Beschreibung

Die Erfindung betrifft ein Verfahren zur kontinuierlichen Hydrosilylierung von C-C-Mehrfachbindungen tragenden Verbindungen mit Si-H Gruppen aufweisenden Siliciumverbindungen.

Die kontinuierliche Hydrosilylierung von H-Silanen mit Olefinen in Loopreaktoren ist beispielsweise in DE 2851456 C beschrieben. Die Umsetzung verläuft unter guter Vermischung und Wärmeabfuhr. Jedoch müssen unvollständige Reaktion, Nebenreaktionen der Edukte und Rückvermischung der Produkte mit den Edukten in Kauf genommen werden.

In der US 6350824 B ist die kontinuierliche Hydrosilylierung von Siloxanen beschrieben, bei der ein Gemisch der Edukte kontinuierlich durch einen Rohrreaktor geführt wird. Es können so kurze Verweilzeiten realisiert werden. Jedoch führt die ungenügende Energieabfuhr bei stark exothermen Reaktionen zu Nebenreaktionen, hot spots in der Reaktionszone und schwieriger Reaktionskontrolle. So kann kein stabiler Prozess und keine stabile Produktqualität erreicht werden.

WO 03/014129 beschreibt die kontinuierliche Hydrosilylierung mit Microreaktionstechnik. Edelmetallpartikel aus den eingesetzten Katalysatoren können die engen Reaktionsröhren verstopfen. Die Reaktion ist ferner durch Druckaufbau und Druckverlust bei Siloxanen, die eine höhere Viskosität aufweisen, schwer zu steuern.

In US 6291622 B ist eine Kombination aus einem Loop-Vorreaktor und einem nachgeschalteten Rohrreaktor beschrieben. Durch 2 getrennte Anlagenteile entsteht ein grosser Regelaufwand mit höheren Investitions- und Betriebskosten. Feste Eduktverhältnisse sind vorgegeben, da nur eine einstufige Reaktion stattfindet. Es sind grosse Mengen an reaktiven Edukten im Reaktionssystem, deshalb muss ein grosser Aufwand an Sicherheitsvorkehrungen bereitgestellt werden.

EP-A-934947, Beispiel 1 beschreibt wie in einem diskontinuierlich betriebenen Rohrreaktor mit externem Kreislauf, in dem sich das Katalysatorbett befindet, die Edukte Allylglycidylether (II) (AGE) und Trimethoxysilan (III) (TMOS) zu 3-Glycidyloxypropyltrimethoxysilan (I) (GLYMO) umgesetzt werden....Die Kontaktzeit am Katalysator beträgt bei jedem Umlauf 3s. Nach 75 min ist GLYMO mit einer Selektivität von 92.2% gebildet worden.

Gegenstand der Erfindung ist ein Verfahren zur kontinuierlichen Hydrosilylierung von C-C-Mehrfachbindungen tragenden Verbindungen (A) mit Si-H Gruppen aufweisenden Siliciumverbindungen (B), bei dem die Reaktionskomponenten (A) und (B) in einem integrierten Loop-Rohrreaktor kontinuierlich umgesetzt werden, wobei Reaktionsgemisch aus dem Rohr in den Loop und wieder zurück geleitet wird, so dass ein Rohrabschnitt Teil des Loop-Umlaufes ist.

Das Verfahren kombiniert die Vorteile von Loopreaktor und Rohrreaktor. Es erfolgt sehr gute Energieabfuhr und Durchmischung des Reaktionsgemisches. Die Rückvermischung in den Rohrreaktorteilen wird verhindert. Das Edukt reagiert vollständig ab, so dass das Produkt frei von Edukt ist. Durch eine leicht zu führende Prozesskontolle kann gleichbleibend hohe Produkt-Qualität erreicht werden. Die thermische Belastung von Edukten und Produkten kann kurz gehalten werden. Die Nebenreaktionen können dadurch und durch Variation der Reaktionsführung leicht vermindert werden. Dadurch wird Abfall vermieden und die Herstellkosten vermindert. Die Ausbeuten können erhöht und die Reaktionsselektivität verbessert werden. Es sind relativ kleine Mengen an reaktiven Edukten im Reaktionssystem. Der Einsatz von Lösungsmittel kann verringert werden und z.B. bei inhomogenen Systemen völlig wegfallen. Der Rohstoffeinsatz kann optimiert werden, z.B. durch Reduktion des Olefinüberschusses.

Im Loop können Stöchometrie der Verbindungen (A) und Siliciumverbindungen (B) und Energieabfuhr gut eingestellt werden. Dabei können im anschließenden Rohrreaktor zur Komplettierung der Reaktion die optimale Temperatur eingestellt werden.

Vorzugsweise werden mindestens 10, besonders bevorzugt mindestens 40, insbesondere mindestens 80 Massen-% des Reaktionsgemisches aus dem Rohr in den Loop geleitet.

Bei der erfindungsgemäß eingesetzten Verbindung (A) kann es sich um siliciumfreie organische Verbindungen mit aliphatisch ungesättigten Gruppen sowie um Organosiliciumverbindungen mit aliphatisch ungesättigten Gruppen handeln.

Beispiele für organische Verbindungen, die im erfindungsgemäßen Verfahren als Komponente (A) eingesetzt werden können, sind alle Arten von Olefinen, wie 1-Alkene, 1-Alkine, Vinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien-(1,7), N,N'-Methylen-bis-(acrylsäureamid), 1,1,1-Tris(hydroxymethyl)-propan-triacrylat, 1,1,1-Tris(hydroxymethyl)-propan-trimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly-(propylenglykol)methacrylat, Allylglykole, Allylalkohole, Allylpolyether, Allylglycidether und Allylbernsteinsäureanhydrid.

Des weiteren können bei dem erfindungsgemäßen Verfahren als Bestandteil (A) aliphatisch ungesättigte Organosiliciumverbindungen eingesetzt werden.

Falls als Bestandteil (A) Organosiliciumverbindungen eingesetzt werden, die SiC-gebundene Reste mit aliphatischen Kohlenstoff-Kohlenstoff-Mehrfachbindungen aufweisen, handelt es sich vorzugsweise um solche aus Einheiten der allgemeinen Formel

RₐR¹_{b}SiO_{(4-a-b)/2} (I),

wobei
- **R**: einen von aliphatischen Kohlenstoff-Kohlenstoff-Mehrfachbindungen freien Rest bedeutet,
- **R**^{**1**}: einen einwertigen, gegebenenfalls substituierten, SiC-gebundenen Kohlenwasserstoffrest mit aliphatischer Kohlenstoff-Kohlenstoff-Mehrfachbindung bedeutet,
- **a**: 0, 1, 2 oder 3 ist und
- **b**: 0, 1 oder 2 ist,
mit der Maßgabe, daß die Summe a + b ≤ 4 ist und dass in mindestens einer Einheit der allgemeinen Formel (I) **b** 1 oder 2 ist.

Bei den Organosiliciumverbindungen (A) kann es sich sowohl um Silane handeln, d.h. Verbindungen der allgemeinen Formel (I) mit a+b=4, als auch um Siloxane, d.h. Verbindungen enthaltend Einheiten der allgemeinen Formel (I) mit a+b≤3.

Rest **R** umfaßt die einwertigen Reste -F, -Cl, -Br, -CN, -SCN, -NCO, Alkoxyreste und SiC-gebundene, gegebenenfalls substituierte Kohlenwasserstoffreste, die mit Sauerstoffatomen oder der Gruppe -C(O)- unterbrochen sein können.

Beispiele für Reste **R** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der □- und der □-Phenylethylrest.

Beispiele für substituierte Reste **R** sind Halogenalkylreste, wie der 3,3,3-Trifluor-n-propylrest, der 2,2,2,2',2',2'-Hexafluorisopropylrest und der Heptafluorisopropylrest, sowie Halogenarylreste, wie der o-, m- und p-Chlorphenylrest.

Bevorzugt handelt es sich bei Rest **R** um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest **R**^{**1**} kann es sich um beliebige, einer Anlagerungsreaktion (Hydrosilylierung) mit einer SiHfunktionellen Verbindung zugängliche Gruppen handeln.

Falls es sich bei Rest **R**^{**1**} um SiC-gebundene, substituierte Kohlenwasserstoffreste handelt, sind als Substituenten Halogenatome, Cyanoreste, Alkoxygruppen und Siloxygruppen bevorzugt.

Bevorzugt handelt es sich bei Rest **R**^{**1**} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Bevorzugt als Komponente (A) sind alle endständigen Olefine und alle allylhaltigen, vinylhaltigen und alkinhaltigen Systeme, wobei allylhaltige Systeme besonders bevorzugt sind.

Als Siliciumverbindung (B) können alle hydrogenfunktionellen Siliciumverbindung eingesetzt werden, die auch bisher bei Hydrosilylierungsreaktionen eingesetzt worden sind.

Als Si-H Gruppen aufweisende Siliciumverbindung (B) werden vorzugsweise solche eingesetzt, die Einheiten der allgemeinen Formel

R²_{c}H_{d}SiO_{(4-c-d)/2} (II),

enthalten, wobei
**R**^{**2**} die oben für R angegebene Bedeutung hat,
**c** 0, 1, 2 oder 3 ist und
**d** 1 oder 2 ist,
mit der Maßgabe, daß die Summe von c + d ≤ 4 ist.

Bevorzugt liegen mindestens zwei Si-gebundene Wasserstoffatome pro Molekül vor.

Bei den erfindungsgemäß eingesetzten Siliciumverbindungen (B) kann es sich sowohl um Silane handeln, d.h. Verbindungen der allgemeinen Formel (II) mit c+d=4, als auch um Siloxane, d.h.

Verbindungen enthaltend Einheiten der allgemeinen Formel (II) mit c+d<3. Vorzugsweise handelt es sich bei den erfindungsgemäß eingesetzten Siliciumverbindungen um Organopolysiloxane, insbesondere um solche, die aus Einheiten der allgemeinen Formel (II) bestehen.

Vorzugsweise enthält die erfindungsgemäß eingesetzte Siliciumverbindung (B) Si-gebundenen Wasserstoff im Bereich von 0,02 bis 1,7 Gewichtsprozent, bezogen auf das Gesamtgewicht der Siliciumverbindung (B).

Das Molekulargewicht des Bestandteils (B) im Falle von Siloxan kann in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein.

Die erfindungsgemäß eingesetzten Komponenten (A) und (B) sind handelsübliche Produkte bzw. nach in der Chemie gängigen Verfahren herstellbar.

Das Verhältnis der Verbindungen (A) und Siliciumverbindung (B) ist beliebig einstellbar. Bevorzugt ist ein Überschuss an Verbindungen (A).

Vorzugsweise werden homogene oder heterogene Katalysatoren eingesetzt. Als Katalysatoren werden die Elemente oder Verbindungen von Pt, Rh, Pd, Ir bevorzugt. Der Katalysator kann flüssig, fest oder in geeigneten Lösemitteln gelöst oder als Festbettkatalysator vorliegen.

Besonders geeignete Katalysatormengen sind 1 bis 500 ppm, vorzugsweise 2 bis 100 ppm, insbesondere 5 bis 50 ppm, jeweils bezogen auf die Summe der Massen von Verbindungen (A) und Siliciumverbindung (B).

Als Hilfsstoffe können im Verfahren beispielsweise organische Lösungsmittel eingesetzt werden.

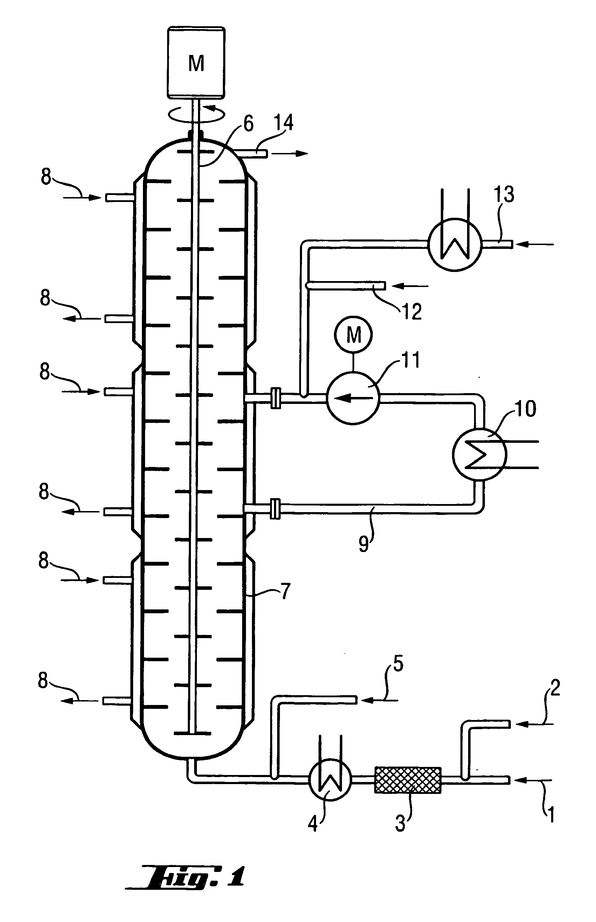

Zur Erläuterung des Verfahrens wird nachstehend auf Figur 1 Bezug genommen, in welcher eine bevorzugte Variante des Verfahrens beschrieben ist.

Si-H Gruppen aufweisende Siliciumverbindung (B) (1) und C-C-Mehrfachbindungen tragende Verbindungen (A) (2) werden kontinuierlich durch eine Vormischkammer (3) geleitet und das Gemisch in einem Wärmetauscher (4) vortemperiert. Das temperierte Gemisch wird gegebenenfalls mit Katalysator (5) versetzt und in die erste Zone des mit einer Rühreinrichtung (6) versehenen Reaktors eingeleitet. Das Rohr (7) besteht aus 3 Zonen, deren Temperaturen getrennt mit Temperiermittel (8) geregelt werden. Am Beginn der mittleren Zone des Rohrs (7) ist die Ableitung zum Loop (9), der mit Wärmetauscher (10) und Pumpe (11) versehen ist. Bei Bedarf können in den Loop (9) über Zuleitungen (12, 13) weitere Reaktionspartner, Katalysatoren und Hilfsstoffe zugesetzt werden, gegebenenfalls vortemperiert.

Die Förderrichtung im Loop (9) ist frei wählbar. Das Reaktionsgemisch wird durch die letzte Zone des Rohrs (7) geleitet und verlässt über Leitung (14) den Reaktor. Die Ableitungsstelle aus dem Rohr (7) in den Loop (9) ist frei wählbar. Die Rückführung wird vorzugsweise so gewählt, dass die verbleibende Rohrstrecke zur vollständigen Reaktion der Edukte ausreicht.

Die Dosierung von Katalysator kann bei diesem Verfahren an verschiedenen Orten zu verschiedenen Zeitpunkten kontinuierlich erfolgen. Katalysator kann beispielsweise in der Vormischkammer (3) oder erste Zone oder mittleren Zone des Rohrs (7) oder in den Loop (9) dosiert werden.

Die Katalysatordosierung kann mit geeigneten Pumpsystemen vonstatten gehen. Geeignete Pumpsysteme sind hierbei z.B. Mikropräzisionsdosierpumpen und Kolbenpumpen. Die Mengen des kontinuierlich zudosierten Katalysators werden dabei z.B. über die freie Wegstrecke der Mikrodosierpumpe exakt definiert.
Bei der Verwendung von geeigneten Fließbettkatalysatoren kann die Katalysatordosierung entfallen.

Die Edukte (A), (B) und Hilfsstoffe können über Pumpen, Druckleitungen oder Saugleitungen kontinuierlich im benötigten Mengenverhältnis dosiert werden. Die Mengenerfassung kann dabei in Kombination mit Waagen oder Durchflußmeßeinrichtungen bewerkstelligt werden. Die Edukte können dabei Temperaturen haben von -20°C bis 100°C, bevorzugt 0°C und 60°C und besonders bevorzugt 10°C bis 35°C.

Bei der Verwendung von Druckleitungen und Pumpen kann der gesamte Durchflußprozeß mit den Pumpen oder dem Leitungsdruck (z. B. Stickstoffdruckleitung) gesteuert werden, d. h. die Verweildauer der Edukte in den Reaktionszonen des kontinuierlichen Reaktors wird über die Pumpgeschwindigkeit oder den anliegenden Leitungsdruck bestimmt.
Bei der Verfahrensvariante mit einer vorgeschalteten, temperierbaren kontinuierlichen Vormischkammer (3) kann die Eduktmischung von einer separaten Pumpe aus in den kontinuierlichen Loop-Rohrreaktor gepumpt werden. Bei dieser Variante ist die Steuerung der Verweildauer der Edukte in den Reaktionszonen des kontinuierlichen Reaktors mit dieser einen Pumpe möglich.

Die Durchmischung der Edukte in der Vormischkammer (3) kann durch geeignete Mischeinrichtungen erfolgen. Geeignete Mischeinrichtungen sind z. B. Rührer und Ultraschall. Die Temperatur in der Vormischkammer (3) kann dabei frei gewählt werden. Bevorzugt ist 10°C bis 35°C.

Im Rohr (7) kann Durchmischung durch die Rühreinrichtung (6) erfolgen z. B. durch statische Mischer oder aktive Mischung durch parallel zur Längsachse des Rohrs (7) laufende Rührwerkzeuge (6). Diese Rührwerkzeuge können extern angetrieben oder durch die vorbeifließende Flüssigkeit in Bewegung versetzt werden. Durchmischungs- und Verwirbelungseffekte im Rohr (7) können auch durch fest eingebaute oder wechselbare Trombenstörer an der Wandung des Rohrs (7) erreicht werden. Im Rohr (7) kann die Durchmischung auch mittels eingesetzter Füllkörper erfolgen. Geeignete Füllkörper sind z. B. Glaskugeln, Keramik- oder Glashohlkörper, Metallspäne etc..

Verwendbar sind alle gängigen Reaktorgeometrien und Formen wie diese zum Beispiel in Kirk-Othmer, Encyclopedia of Chemical Technology, J. Wiley & Sons, 4. Ausgabe, Band 20, Seite 1007 bis 1059 beschrieben sind. Besonders bevorzugt ist eine zylindrische Reaktorform, wobei das Verhältnis Durchmesser zu Länge beliebig variieren kann, wie z. B. von 1 zu 10 bis 1 zu 2500. Die Stellung des Reaktors ist beliebig. Das Material des Reaktors kann von Metall, wie Chrom- Vanadium- Stahl-Reaktoren, emaillierten Stahl-Reaktoren bis hin zu Glasreaktoren variieren.

Im Loop (9) kann Durchmischung durch die Rühreinrichtung (6) erfolgen z. B. durch statische Mischer oder aktive Mischung Diese Rührwerkzeuge können extern angetrieben oder durch die vorbeifließende Flüssigkeit in Bewegung gesetzt werden. Eine gute Durchmischung wird auch durch eine hohe Umlaufgeschwindigkeit bewirkt.

Vorzugsweise werden im Loop weitere Edukte zugesetzt.

Der Loop-Rohrreaktor wird in einem Temperaturbereich von -50°C bis + 400°C betrieben, bevorzugt von 0°C bis 250°C und besonders bevorzugt von 60°C und 120°C. Die Temperierung kann durch geeignete Temperierungseinrichtungen (8) erfolgen. Geeignete Temperierungseinrichtungen (8) sind dabei Temperiermittel (8), wie Ölkreislauf zum Heizen und Kühlen, oder zwei unabhängige Kühl- und Heizkreisläufe auf Öl- oder Solebasis, Strahlungsöfen, Heizgebläse und Dampfheizungen aller Art, wie Wasserdampfheizung.

Der Loop-Rohrreaktor kann bei den oben angegebenen Betriebstemperaturen in einem absoluten Druckbereich von Vakuum, d. h. 1 mbar bis zu 300 bar, gefahren werden. Bevorzugt sind Drucke von 1 bis 150 bar, insbesondere 4 bis 20 bar.

Der Durchsatz, d.h. der Durchfluß an Edukten, bzw. Produkt pro Zeiteinheit kann je nach Reaktorgröße, d.h. Reaktorlänge und Durchmesser, Reaktionsparameter, d. h. Reaktionstemperatur, Viskosität der Edukte und des Produkts, Exothermie der Reaktion und Reaktionskinetik von 100 g pro Stunde bis 10000 kg pro Stunde an Edukten variieren. Bevorzugt sind Umsätze von 1 kg pro Stunde bis 500 kg pro Stunde. Besonders bevorzugt sind 10 kg bis 1000 kg pro Stunde Durchsatz an Edukten.

Die Durchsatzregelung kann über kontinuierliche Dosiereinheiten (1), (2) und (13) gesteuert werden. Eine weitere Möglichkeit der Durchsatzregulierung an Edukt ist ein elektronisch ansteuerbares oder manuell bedienbares Auslaßventil oder Regelventil an einer beliebigen Stelle im Loop-Rohrreaktor nach der Zurückleitung des Reaktionsgemisches des Loops (9) oder am Ende des Rohrs (7). Hierbei müssen dann die Fördereinrichtungen, wie Pumpen und Druckleitungen nicht nur gegen die Viskosität der Edukte und Produkte sondern auch gegen einen bestimmten konstanten, frei einstellbaren Druck des eingebauten Regelventils fördern. Diese Art der Durchflußregelung ist besonders bevorzugt.

Die Produktqualität wird vorzugsweise ständig durch "on-line"-Meßmethoden überwacht. Geeignete Meßmethoden sind alle, die in ausreichend kurzer Zeit den Umsatz der Reaktion detektieren können. Dies sind z.B. spektroskopische Meßverfahren, wie Nah-Infrarot-Spektroskopie, FT-IR-Spektroskopie, Raman- und FT-Ramanspektroskopie.

Das Reaktionsgemisch ist vorzugsweise bei den im Loop-Rohrreaktor vorherrschenden Bedingungen flüssig. Vorzugsweise weist das Reaktionsgemisch eine Viskosität von höchstens 10 000 mPa·s auf.

Es kann im Verfahren eine Einstufenreaktion oder eine Mehrstufenreaktion durchgeführt werden. Es können mehrere integrierte Loop-Rohrreaktoren hintereinander geschaltet werden, d.h. modularer Aufbau einer mehrstufigen Reaktion ist möglich. Dabei ist in jeder Reaktionsstufe eine von der vorhergehenen Reaktionsstufe unabhängige Reaktion möglich. Beispielsweise können nachfolgend zur kontinuierlichen Hydrosilylierung weitere polymeranaloge Reaktionen in einem kontinuierlichen Reaktor durchgeführt werden, wie Aminreaktionen mit Epoxiden und Verseifung von Säureestern.

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

### Beispiel 1: Loop-Rohrreaktor erfindungsgemäss

Die Bezugsziffern beziehen sich auf Figur 1. Durch ein zylindrisches Edelstahlrohr (7) mit drei Heiz/Kühlzonen (V4A-Stahl), einer aktiven Rührung (6) einer Länge von 6,7 m und einem Nennvolumen von 7000 ml wurde eine Mischung von Hydrogenmethylpolysiloxan Me₃SiO(HMeSiO)₅₀SiMe₃ (7,8 kg/h) und Alpha-Methylstyrol (2,6 kg/h) dosiert.
In der mittleren Zone befand sich ein Kreislauf (Loop) (9), einschliesslich Wärmetauscher (10). In den Loop (9) wurden über Zuleitung (12) 75 ml/h einer 1 Gew.-%igen Lösung von Hexachlorplatinsäure in Isopropanol als Katalysatorlösung zugegeben. Als zweite Olefin-Komponente wurden über Zuleitung (12) 19,6 kg/h 1-Dodecen dosiert. Die Pumpe im Loop förderte 150 1/h und die Drehzahl des Rühreres betrug 620 U/min.

Die Reaktionstemperatur betrug im gesamten Reaktorbereich 136 - 142 °C. Das Produkt enthielt 2,3 - 2,6 Mol-% nicht abreagiertes SiH.

### Beispiel 2: Rohrreaktor ohne Loop, nicht erfindungsgemäss

Eingesetzt wurde ein zylindrisches Edelstahlrohr (7) analog Beispiel 1, der jedoch keinen Loop sondern 2 zusätzliche Dosierstellen aufwies, nämlich nach (stromabwärts) der ersten Zone und nach (stromabwärts) der mittleren Zone des Rohrreaktors. In die erste Dosierstelle am Beginn des Rohrreaktors(7) wurde eine Mischung von Hydrogenmethylpolysiloxan Me₃SiO(HMeSiO)₅₀SiMe₃ (7,8 kg/h) und Alpha-Methylstyrol (2,6 kg/h) dosiert. An den drei Dosierstellen, wurden je 25 ml/h Katalysatorlösung analog Beispiel 1 zugegeben.
Als zweite Olefin-Komponente wurde 1-Dodecen in gleichen Teilen (je 9,8 kg/h) nach der ersten und mittleren Zone dosiert.

Die Reaktionstemperatur betrug zwischen 100 und 190 °C. Trotz Variation der Kühlbedingungen und Dosierungen konnte die Temperatur in der mittleren Kühlzone nicht unter 160 °C gesenkt werden, wodurch ein Teil des 1-Dodecens zu 2-Dodecen isomerisierte und nicht mehr für die gewünschte Hydrosilylierungsreaktion zur Verfügung stand.
Das Produkt enthielt 4,5 - 5 Mol-% nicht abreagiertes SiH.

### Beispiele 3: Simulierter Loopreaktor, nicht erfindungsgemäss

In einem 51 Autokalven, der als kontinuierlicher Rührkessel betrieben wird ( Simulation eines Loopreaktors) werden 1000 g (13.1 mol) Allylchlorid mit 8 g Platinkatalysator ( Pt-IV Chlorid Lösung in Olefin C₁₂ mit einer Platinkonzentration von 1 Gew.-%) unter Rühren vorgelegt und auf 70°C aufgeheizt. Anschließend werden 2 mol Chlorsilan (Beispiel 3a Methyldichlorsilan = 232 g, Beispiel 3b Trichlorsilan = 273 g) zudosiert, bis die exotherme Reaktion anspringt. Nachdem weitere 11 mol des Chlorsilan (Beispiel 3a Methyldichlorsilan = 1276 g, Beispiel 3b Trichlorsilan = 1500 g) dosiert worden sind und die Parameter Druck und Temperatur konstant sind, werden folgende kontinuierliche Dosierraten eingestellt:
1000 g Allylchlorid pro Stunde
8 g Platinkatalysatorlösung pro Stunde ( ca. 30 ppm)
Beispiel 3a = 1500 g Methyldichlorsilan
Zielprodukt = Chlorpropylmethyldichlorsilan
Beispiel 3b = 1770 g Trichlorsilan
Zielprodukt = Chlorpropyltrichlorsilan

Gleichzeitig werden 2500 g Reaktionsmischung aus dem Reaktor kontinuierlich abgeführt.
Die Proben werden aus dem Reaktorablauf nach 2 Stunden des kontinuierlichen Betriebes gezogen. Die Ergebnisse der GC-Analysen sind in Tabelle 1 dargestellt.

### Beispiele 4: Loop-Rohrreaktor erfindungsgemäss

Der in Beispiel 1 beschriebene Loop-Rohrreaktor wurde auch für die Silansynthese verwendet. Dabei wurden folgende Mengen an folgenden Stellen dosiert:

### a) Chlorpropyltrichlorsilan

### Dosierung 1. Rohrabschnitt:

| | |
|---|---|
| Trichlorsilan: | 12 mol/h ( 1640 g / h) |
| Allylchlorid: | 15 mol/h (1150 g / h) |
| Platinkatalysator | 6 g/ h ( ca. 20 ppm) |
| T = 80°C | |

### Dosierung Loop:

| | |
|---|---|
| Trichlorsilan: | 7 mol/h (960 g / h) |
| Allylchlorid: | 3 mol/h (230 g / h) |
| Platinkatalyator | 5 g/ h (ca. 10 ppm) |
| T = 80°C | |

### Letzter Rohrabschnitt:

T = 100°C.
Der Druck stellt sich bei den gegebenen Temperaturen jeweils ein.

### b) Chlorpropylmethyldichlorsilan

### Dosierung 1. Rohrabschnitt:

| | |
|---|---|
| Methyldichlorsilan: | 12 mol/h ( 1400 g / h) |
| Allylchlorid: | 15 mol/h (1150 g / h) |
| Platinkatalysator | 6 g/ h ( ca. 22 ppm) |
| T = 80°C | |

### Dosierung Loop:

| | |
|---|---|
| Methyldichlorsilan: | 7 mol/h (820 g / h) |
| Allylchlorid: | 3 mol/h (230 g / h) |
| Platinkatalyator | 5 g/ h (ca. 11 ppm) |
| T = 80°C | |

### Letzter Rohrabschnitt:

T = 100°C
Der Druck stellt sich bei den gegebenen Temperaturen jeweils ein.

Die Ergebnisse der GC-Analysen sind in Tabelle 1 dargestellt:

| | GC - Analyse Daten | | | |
|---|---|---|---|---|
| Beispiel | Zielprodukt | Nebenprodukt | Edukt- Silan | Allylchlorid |
| | | | | |
| 3a* | 45 % | Methyltrichlorsilan 23% Propylmethyldichlorsilan 23% | 8% | - - |
| 3b* | 60 % | SiCl₄ 16 % Propyltrichlorsilan 17 % | 5% | - - |
| | | | | |
| 4a | 60% | Methyltrichlor-silan 16% Propylmethyldichlorsilan 17% | 5% | - - |
| 4b | 72% | SiCl₄ 12 % Propyltrichlorsilan 12 % | 3% | - - |

| | | | | |
|---|---|---|---|---|
| * nicht erfindungsgemäss | | | | |

## Patentansprüche

1. Verfahren zur kontinuierlichen Hydrosilylierung von C-C-Mehrfachbindungen tragenden Verbindungen (A) mit Si-H Gruppen aufweisenden Siliciumverbindung (B) bei dem die Reaktionskomponenten (A) und (B) in einem integrierten Loop-Rohrreaktor kontinuierlich umgesetzt werden, wobei Reaktionsgemisch aus dem Rohr in den Loop und wieder zurück geleitet wird, so dass ein Rohrabschnitt Teil des Loop-Umlaufes ist.

2. Verfahren nach Anspruch 1, bei dem der Bestandteil (A) ausgewählt wird aus siliciumfreien organischen Verbindungen mit aliphatisch ungesättigten Gruppen und Organosiliciumverbindungen mit aliphatisch ungesättigten Gruppen.

3. Verfahren nach Anspruch 1 und 2, bei dem als Si-H Gruppen aufweisende Siliciumverbindung (B) solche eingesetzt werden, die Einheiten der allgemeinen Formel
R²_{c}H_{d}SiO_{(4-c-d)/2} (II),
enthalten, wobei
R² einen von aliphatischen Kohlenstoff-Kohlenstoff-Mehrfachbindungen freien, organischen Rest bedeutet,
c 0, 1, 2 oder 3 ist und
d 1 oder 2 ist,
mit der Maßgabe, daß die Summe von c + d < 4 ist.

4. Verfahren nach Anspruch 1 bis 3, bei dem homogene oder heterogene Katalysatoren eingesetzt werden.

5. Verfahren nach Anspruch 4, bei dem als Katalysatoren die Elemente oder Verbindungen von Pt, Rh, Pd, Ir eingesetzt werden.

6. Verfahren nach Anspruch 4 und 5, bei dem 1 bis 500 ppm Katalysatoren , bezogen auf die Summe der Massen von Verbindungen (A) und Organosiliciumverbindungen (B) eingesetzt werden.

7. Verfahren nach Anspruch 1 bis 6, bei dem das Reaktionsgemisch eine Viskosität von höchstens 10 000 mPa·s aufweist.

8. Verfahren nach Anspruch 1 bis 7, bei dem im Loop weitere Edukte zugesetzt werden.

## Claims

1. Process for the continuous hydrosilylation of compounds (A) bearing C-C multiple bonds by means of silicon compounds (B) having Si-H groups, in which the reaction components (A) and (B) are reacted continuously in an integrated loop-tube reactor, with reaction mixture being conveyed from the tube into the loop and back again so that a section of the tube is part of the loop circuit.

2. Process according to claim 1, wherein the constituent (A) is selected from among silicon-free organic compounds having aliphatically unsaturated groups and organosilicon compounds having aliphatically unsaturated groups.

3. Process according to claim 1 or 2, wherein compounds comprising units of the general formula
R²_{c}H_{d}SiO_{(4-c-d)/2} (II),
where
R² is an organic radical which is free of aliphatic carbon-carabon multiple bonds,
c is 0, 1, 2 or 3 and
d is 1 or 2,
with the proviso that the sum of c + d is ≤ 4
are used as silicon compound (B) having Si-H groups.

4. Process according to any of claims 1 to 3, wherein homogeneous or heterogeneous catalysts are used.

5. Process according to claim 4, wherein the elements or compounds of Pt, Rh, Pd, Ir are used as catalysts.

6. Process according to claim 4 or 5, wherein from 1 to 500 ppm of catalysts, based on the sum of the masses of compounds (A) and organosilicon compounds (B), are used.

7. Process according to any of claims 1 to 6, wherein the reaction mixture has a viscosity of not more than 10 000 mPa·s.

8. Process according to any of claims 1 to 7, wherein further starting materials are added in the loop.

## Revendications

1. Procédé d'hydrosilylation en continu de composés (A) portant des liaisons C-C multiples avec un composé de silicium (B) présentant des groupes Si-H, dans lequel on fait réagir les composants de réaction (A) et (B) en continu dans un réacteur tubulaire à boucle intégrée, où le mélange réactionnel est guidé hors du tube dans la boucle et renvoyé, de sorte qu'une section du tube fait partie de la circulation en boucle.

2. Procédé suivant la revendication 1, dans lequel le constituant (A) est choisi parmi des composés organiques exempts de silicium comportant des groupes aliphatiques insaturés et des composés organosiliciques comportant des groupes aliphatiques insaturés.

3. Procédé selon les revendications 1 et 2, dans lequel l'on met en oeuvre en tant que composé de silicium (B) présentant des groupes Si-H des composés contenant des unités de la formule générale
R²_{c}H_{d}SiO_{(4-c-d)} /2 (II)
dans laquelle
R² représente un radical organique exempt de liaisons C-C multiples aliphatiques,
c vaut 0, 1, 2 ou 3 et
d vaut 1 ou 2,
à la condition que la somme de c + d soit < 4.

4. Procédé suivant les revendications 1 à 3, dans lequel l'on met en oeuvre des catalyseurs homogènes ou hétérogènes.

5. Procédé suivant la revendication 4, dans lequel l'on met en oeuvre en tant que catalyseurs les éléments ou des composés de Pt, Rh, Pd, Ir.

6. Procédé suivant les revendications 4 et 5, dans lequel l'on met en oeuvre de 1 à 500 ppm de catalyseurs, par rapport à la somme des masses des composés (A) et des composés organosiliciques (B).

7. Procédé selon les revendications 1 à 6, dans lequel le mélange réactionnel présente une viscosité d'un maximum de 10 000 mPa.s.

8. Procédé suivant les revendications 1 à 7, dans lequel on ajoute d'autres éduits dans la boucle.
